# EUROPEAN PATENT APPLICATION

(11) **EP 4 790 951 A1**
(43) Date of publication of application: **12.08.2026**
(21) Application number: 25382108.6
(22) Date of filing: 10.02.2025
(51) Int. Cl.: H04L 9/40, G06N 3/08

(54) **COMPUTER-IMPLEMENTED SYSTEM AND METHOD FOR THE DETECTION OF CYBERATTACKS**

(71) Applicant: Foqum Analytics S.L., 28080 Madrid (ES); Fundación Universidad Francisco de Vitoria, 28223 Pozuelo de Alarcón (ES)
(72) Inventor: García Tejedor, Álvaro José, deceased (ES); Maitín, Ana María, 28223 Madrid (ES); Alba Linero, Emilio, 28080 Madrid (ES); Arranz Luque, Carlos, 28080 Madrid (ES)
(74) Representative: Clarke, Modet y Cía., S.L.

(57) **Abstract**

Computer-implemented system and method for the detection of cyberattacks. The method (100) comprises:
receiving (110) a data frame (5) of a network traffic with a plurality of data packets (13);
identifying (120) flows of communication (122) in the data frame (5);
dividing (130) each flow of communication (122) into semiflows (132) formed by a predetermined number of data packets (13);
adjusting (140) the payload (138) size of the data packets (13) of each semiflow (132) to a predetermined size, obtaining a modified payload (142) for each data packet (13);
dividing (150) the modified payload (142) of the data packets (13) of each semiflow (132) into fragments (154) of a fixed size, obtaining a fragmented payload (152) for each data packet (13); and
detecting (160) cyberattacks (12) in the data frame (5) of the network traffic by classifying each semiflow, using a trained classifier (32) that takes as input the fragmented payloads (152).

## Description

### Field of the invention

The present invention is included in the field of detection and classification of cyberattacks by monitoring network traffic.0

### Background of the invention

The exponential growth of network traffic has made network management more complex, increasingly requiring a thorough analysis and a greater understanding of the flow of information circulating through the computer networks. Network Traffic Classification (NTC) is becoming increasingly complex due to the wide variety of interconnected applications and devices and the massive volume of network traces, which make it difficult to analyze this data, especially in a real-time application. These aspects pose several technical and analytical limitations due to the dynamic nature of this data.

The lack of a standard network traffic pre-processing protocol means that correlations can be introduced between the training and validation results, being able to bias the results of the models or algorithms used, which makes it difficult to apply them to new data. The classic methods are based on port inspection [1], Deep Packet Inspection [2] and Surface Packet Inspection [2]. However, Artificial Intelligence techniques, both machine learning and deep learning techniques, are also affected by these limitations, so preprocessing also benefits the use of these techniques. Although these techniques are able to cope with large amounts of data with high throughput ([3], [4]), the volume of current network traffic remains a challenge even for these techniques.

Natural Language Processing (NLP) techniques, based on Transformer models [5], are those that offer greater potential to analyze this data due to their ability to discover relationships between data, extracting inherent properties and connections and for their robustness in handling unbalanced classes [6]. These techniques reduce the need for extensive pre-processing and allow the extraction of information from raw data in addition to having a greater analysis capacity favoring the application in real time. However, they are affected by correlations of packets belonging to the same flow that can share information, biasing the results of the training and making it difficult to generalize the model [7].

Currently, there are various methods used for the detection of cyberattacks, which are based on both traditional approaches and advanced techniques, such as Artificial Intelligence (AI) and Machine Learning (ML, "Machine Learning"). Next, a brief description of the most used will be made, with a more detailed approach in those based on Al and ML, since these methods are the ones that are intended to be improved with the present invention:
1. Intrusion Detection Systems (IDS, "Intrusion Detection System"): IDSs monitor network traffic for suspicious patterns. They are divided into: IDS based on signature and IDS based on anomalies.
2. Intrusion Prevention Systems (IPS, "Intrusion Prevention System"): IPSs act proactively, blocking detected threats in real time. Unlike IDS, which only detect, IPSs also try to mitigate the attack.
3. Security Information and Event Management (SIEM, "Security Information and Event Management") Systems: SIEMs consolidate and analyze events from various sources in real time, allowing the correlation of data to identify threats, but do not block threats directly. This approach takes a broad view of network systems and their security.
4. Network Traffic Analysis (NTA, "Network Traffic Analysis") by inspecting the characteristics of network packets. In this methodology, it is about identifying and classifying the attack category through a more or less complex review, depending on the method, of the packets that travel through the network. They range from very rudimentary methods to more complex and modern methods such as the use of deep neural networks. The most relevant are recited below:
   - Port inspection is based on associating applications or services with certain ports. When traffic is detected and analyzed, the port it uses is identified and compared with a previously created list, if said port exists in the list it is classified with the corresponding label. This method is quite simple, but ineffective.
   - Deep Packet Inspection (DPI) is based on analyzing the data that is being transported by each packet, trying to find certain protocols, headers, or patterns that can associate the packet with a specific service or application. This way of analyzing network traffic has been totally surpassed as soon as packet encryption protocols became a standard.
   - The Stateful Packet Inspection (SPI, "Stateful Packet Inspection") is a modification of the DPI that was proposed as an alternative to overcome the difficulty of encrypted traffic. This method analyzes the packet headers, along with stored information about old connections, considering the context of the current traffic in progress. This method is faster than the aforementioned DPI.

Due to the limitations of the previous models, the use of Al and ML models began to be explored. Thanks to its ability to identify abnormal behaviors, it is very effective in complex networks, as well as the ability to be easily retrained with new samples, adapting more easily to network changes. However, these new techniques present challenges that the present invention aims to address:
- Quality of data: Al and ML models are highly sensitive to the quality of data. If packets are not processed and organized correctly, models may give inaccurate or imprecise results.
- Data size and pre-processing: Organizing and filtering large volumes of network traffic so that Al models can process them efficiently is a challenge. It is necessary to transform raw data into a structured and flexible form, which is complicated by the lack of consensus on pre-processing best practices.

### References

[1] Cheng G, Wang S. Traffic classification based on port connection pattern. 2011 International Conference on Computer Science and Service System (CSSS). p. 914-7.
[2] Azab A, Khasawneh M, Alrabaee S, Choo KKR, Sarsour M. Network traffic classification: Techniques, datasets, and challenges. Digit Commun Netw. September 18, 2022.
[3] Abbasi M, Shahraki A, Taherkordi A. Deep Learning for Network Traffic Monitoring and Analysis (NTMA): A Survey. Comput Commun. March 15, 2021;170:19-41.
[4] Lin X, Xiong G, Gou G, Li Z, Shi J, Yu J. ET-BERT: A Contextualized Datagram Representation with Pre-training Transformers for Encrypted Traffic Classification. Proceedings of the ACM Web Conference 2022. New York, NY, USA: Association for Computing Machinery; 2022. p. 633-42. (WWW '22).
[5] Vaswani A, Shazeer N, Parmar N, Uszkoreit J, Jones L, Gomez AN, et al. Attention is All you Need. Guyon I, Luxburg UV, Bengio S, Wallach H, Fergus R, Vishwanathan S, et al., editors. Advances in Neural Information Processing Systems 30. Curran Associates, Inc.; 2017. p. 5998-6008.
[6] Cheng J, He R, Yuepeng E, Wu Y, You J, Li T. Real-Time Encrypted Traffic Classification via Lightweight Neural Networks. GLOBECOM 2020 - 2020 IEEE Global Communications Conference.
[7] Umair M, Iqbal Z, Bilal M, Nebhen J, Almohamad T, Mehmood R. An Efficient Internet Traffic Classification System Using Deep Learning for loT. Comput Mater Contin. 2021;71(1):407-22.

### Description of the invention

The present invention presents a computer-implemented system and method for the detection of cyberattacks, including preprocessing to convert gross network traffic into a format more suitable for being consumed by Al models. This preprocessing organizes the packets, extracting key fields (such as the payload) and adapting the data using flexible hyperparameter configurations. These configurations allow to adjust the level of detail of the pre-processing according to the needs of the Al model: simplifying the data for less complex models or enriching it with more detailed information for models that can take advantage of it. This optimizes the compatibility between data and models, thus improving efficiency and reducing the time needed for the detection of cyberattacks.

The pre-processing of the proposed network traffic eliminates the variables that can produce bias in the results of the models by working only with the content of the transmitted packet, that is, the payload. This approach removes the limitations associated with classical methods. The proposed data pre-processing takes into account the actual traffic volume and class imbalance, although it does not apply specific balancing techniques; it is assumed that the user of the algorithm will be responsible for collecting a balanced data set or for managing the possible consequences of an imbalance in the performance of the model. This method focuses on avoiding bias introduced by correlations between similar data at different steps of model training/validation/testing in machine learning models. The method eliminates any bias when performing the analysis on raw content, making it independent of the device connected to the network, the type of device and the connection. The invention establishes a standardized protocol for the processing and classification of network traffic data applied to the field of cybersecurity that offers better threat detection.

A first aspect of the present invention relates to a computer-implemented method for the detection of cyberattacks. The method comprises receiving a data frame of a network traffic, wherein the data frame comprises a plurality of data packets; identifying flows of communication in the data frame of the network traffic, wherein each flow of communication corresponds to a set of data packets of an application exchanged between two devices; dividing each flow of communication into at least one semiflow, wherein each semiflow is formed by a predetermined number of data packets; adjust the payload size of the data packets of each semiflow to a predetermined size, obtaining a modified payload for each data packet; divide the modified payload of the data packets of each semiflow into fragments of a fixed size, obtaining a fragmented payload for each data packet; and detect cyberattacks on the data frame of the network traffic by classifying each semiflow, using a trained classifier that takes as input the fragmented payloads, as corresponding or not to a cyberattack.

The present invention also relates to a system for the detection of cyberattacks, comprising a data processing unit configured to carry out the method, a program product comprising program instruction means for carrying out the method when the program is executed on a processor, and a program support means storing the program product.

A second aspect of the present invention relates to a computer-implemented method of training a classifier for the detection of cyberattacks. The training method comprises receiving a training data frame corresponding to a network traffic, wherein the training data frame comprises a plurality of data packet groups associated with a certain category; identifying flows of communication in the training data frame, wherein each flow of communication corresponds to a set of data packets of an application exchanged between two devices; dividing each flow of communication into at least one semiflow, wherein each semiflow is formed by a predetermined number of data packets; adjusting the payload size of the data packets of each semiflow to a predetermined size, obtaining a modified payload for each data packet; dividing the modified payload of the data packets of each semiflow into fragments of a fixed size, obtaining a fragmented payload for each data packet; generating a list of labeled semiflows comprising the fragmented payloads of the data packets of each semiflow; and a label that identifies the category to which each semiflow belongs, where the category identifies the semiflow as corresponding or not to a cyberattack; and training a classifier for the detection of cyberattacks using the list of labeled semiflows.

The present invention also relates to a training system of a classifier for the detection of cyberattacks, comprising a data processing unit configured to carry out the training method, a program product comprising program instruction means for carrying out the training method when the program is executed on a processor, and a program support means storing said program product.

### Brief description of the drawings

A series of drawings which help to better understand the invention and which expressly relate to an embodiment of said invention which is presented as a non-limiting example thereof will now be described very briefly.
Figure 1 shows the real-time analysis of the network traffic of a computer network by a system for the detection of cyberattacks.
Figure 2 shows the subsequent analysis, offline, of network traffic by a system for the detection of cyberattacks.
Figure 3 is a flowchart of a computer-implemented method for the detection of cyberattacks by monitoring data traffic in a computer network.
Figure 4 shows, in an example, the identification of flows of communication in the data frame.
Figure 5 depicts the division of a flow of communication into semiflows.
Figure 6 shows the processing of a PCAP file, which includes raw network traffic data, to obtain a two-dimensional data frame.
Figure 7 shows the processing of the two-dimensional data frame and the obtaining of the hashes that represent the different flows of communication.
Figure 8 illustrates an example two-dimensional data frame corresponding to a flow of communication.
Figure 9 shows obtaining semiflows from the flow of communication of Figure 8.
Figure 10 shows the division of the payload of a data packet of a semiflow into fragments.
Figure 11 shows the fragmented semiflows corresponding to the flow of communication of Figure 9.
Figure 12 shows the detection of cyberattacks by classifying each semiflow using a trained classifier.
Figure 13 is a flowchart of the computer-implemented method of training a classifier for the detection of cyberattacks.
Figure 14 shows a training system of a classifier for the detection of cyberattacks.
Figure 15 shows an example of a training data frame.
Figure 16 shows the obtaining, during training, of the different flows of communication and their respective semiflows.
Figure 17 depicts a confusion matrix obtained after classifier training.

### Detailed description of the invention

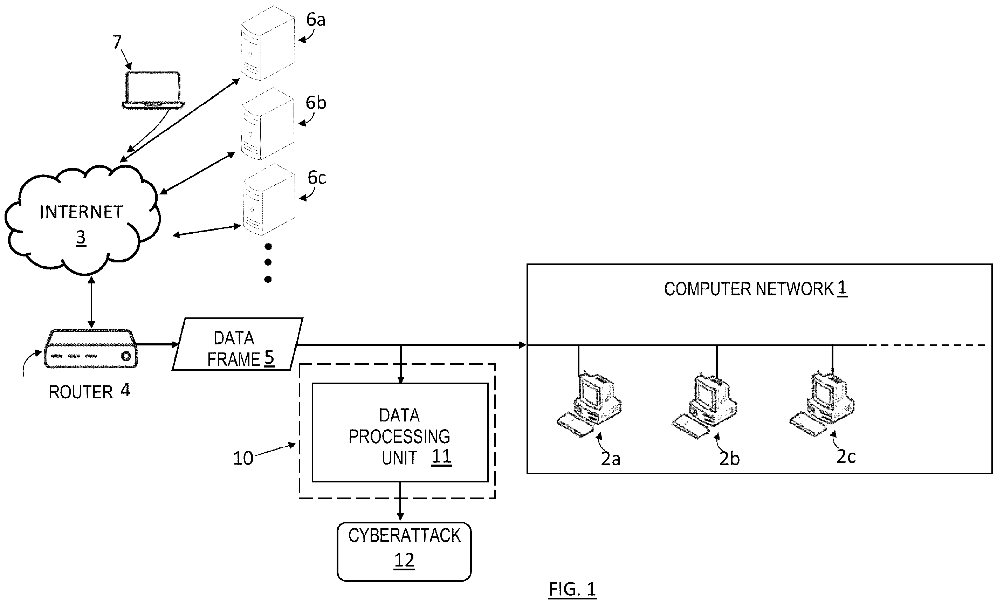

**Figure 1** schematically shows a computer network 1 formed by a set of computers (2a, 2b, 2c,...) connected to the Internet 3 by a router 4, through which the computer network 1 receives a data frame 5 of network traffic from different servers (6a, 6b, 6c,...), e.g. a Youtube server, a Spotify server, etc. Alternatively, the computer network 1 could include a single device (e.g. computer, laptop, mobile phone, tablet, home appliance, etc.) or a set of them.

A first aspect of the present invention relates to a system 10 for the detection of cyberattacks comprising a data processing unit 11 (which may include for example at least one processor and at least one memory) configured to receive and analyze the data frame 5 of the network traffic between the servers (6a, 6b, 6c,...) and the computers (2a, 2b, 2c,...) of the computer network 1 and, based on said analysis, detect a cyberattack 12 when said computer attack occurs by a device external to the computer network 1, such as for example a device 7 that injects malicious code into the network.

As long as a cyberattack is not detected, network traffic passes without incident. However, once a cyberattack 12 is detected, the system 10 performs an action aimed at stopping the cyberattack. For example, the system 10 may issue a warning or alarm that a cyberattack is occurring to a network administrator or a computer system for appropriate action. The system 10 may, additionally or alternatively, adopt other measures, such as temporarily stopping network traffic until the cyberattack is solved. The data processing unit 11 may be further configured to classify the type of cyberattack, and take appropriate actions based on the type of attack produced.

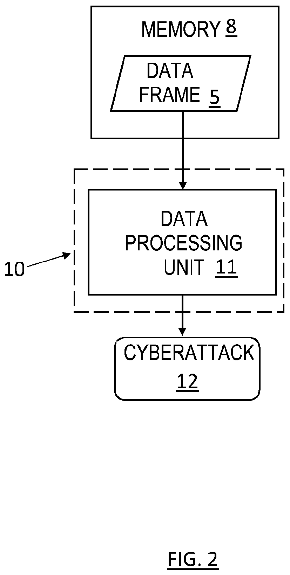

In the embodiment of Figure 1, the system 10 analyzes network traffic and detects cyberattacks in real time, as they are occurring. However, as shown in the embodiment of **Figure 2****,** the system 10 could analyze the data frame 5 subsequently. Thus, a data frame 5 of a network traffic can be stored in a memory 8 (e.g. a hard disk) to be subsequently analyzed by the data processing unit 11. For example, network traffic may occur in a company during the day and the analysis of the data frame 5 may be performed offline overnight. The data frame 5 may include all the network traffic generated during a certain period in the computer network 1 or part thereof (for example, only the traffic corresponding to one or more predetermined computers of the computer network, or the traffic corresponding to one or more applications or services may be monitored). The data processing unit 11 can detect all the cyberattacks 12 produced during the time period corresponding to the data frame 5, indicating the instant in which each attack occurred (using the timestamp of the data packets of the data frame 5), the application or service (e.g. Youtube) and the device or computer involved in each attack.

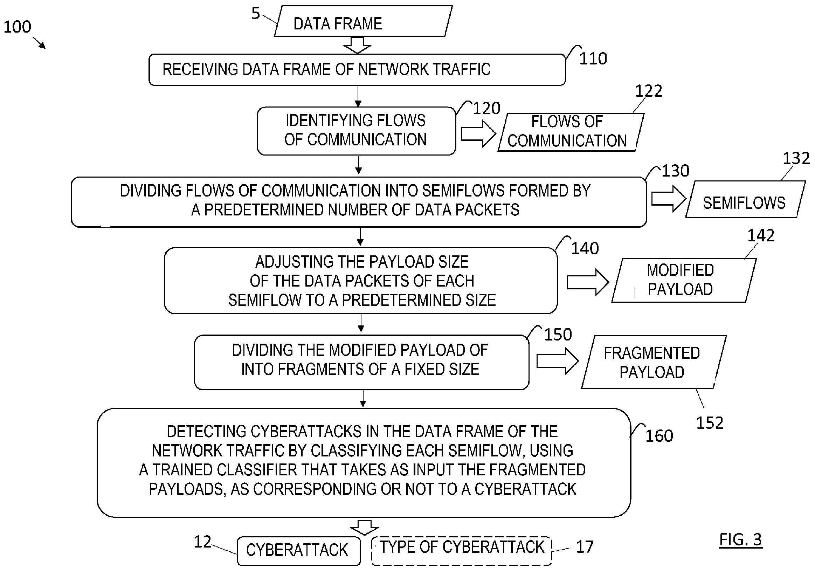

**Figure 3** illustrates a flowchart of a computer-implemented method 100 for the detection of cyberattacks by monitoring data traffic in a computer network 1. The computer-implemented method 100 comprises a set of steps that are executed by the data processing unit 11. In particular, the computer-implemented method 100 comprises the following steps:
- Receiving 110 a data frame 5 of a network traffic, where the data frame 5 comprises a plurality of data packets.
- Identifying 120 flows of communication 122 in the data frame 5 of the network traffic, where each flow of communication 122 corresponds to a set of data packets of an application or service exchanged between two devices.
- Dividing 130 each flow of communication 122 into at least one semiflow 132, wherein each semiflow 132 is formed by a predetermined number of data packets.
- Adjusting 140 the payload size of the data packets of each semiflow 132 to a predetermined size, obtaining a modified payload 142 for each data packet.
- Dividing 150 the modified payload of the data packets of each semiflow 132 into fragments or groups of data of a fixed size, obtaining a fragmented payload 152 for each data packet. This step can also be called tokenization, and the fragments can be called tokens.
- Detecting 160 cyberattacks 12 in the data frame 5 of the network traffic by classifying each semiflow 132, using a trained classifier that takes as input the fragmented payloads 152, as corresponding or not to a cyberattack 12. In one embodiment, the trained classifier takes as input a vector of dimensions [s][p][t], where s represents the number of semiflows to be classified, p the number of packets per semiflow, and t the number of fragments or tokens into which each packet has been divided. Although the vector includes multiple semiflows, the classifier performs the classification individually for each of them. The tokenization carried out in the previous step facilitates the artificial intelligence model to identify patterns and relevant information, improving its ability to distinguish between traffic corresponding or not to a cyberattack 12.

In addition to detecting cyberattacks 12, the method may further comprise classifying the type of cyberattack 17 by classifying each semiflow, using the classifier trained to classify types of attacks, as corresponding or not to certain types of cyberattack. The optionality of obtaining the type of cyberattack 17 is illustrated with dashed lines.

The first challenge posed by the classification of network traffic, either to detect attacks or to classify common traffic, is to distinguish some packets from others, since there may be a device of the computer network 1 downloading a file, another device that is watching YouTube, another device listening to Spotify, a background attack, etc. This causes an amalgamation of packets that mixes communications of all types.

First, 120 flows of communication 122 are identified within the network traffic, that is, within the data that moves through the computer network 1 at a given time. By flow of communication 122 is meant the set of data packets generated by an application or service in the communication between two devices, a device belonging to the computer network 1 and a device external thereto. During the analysis of network traffic, a sniffing process is carried out, which allows to detect and classify both the internal communications of the network (for example, a computer sending data to a printer) and the communications between the internal network and external servers (for example, a mobile downloading a file from Google Drive). The analysis is not carried out packet by packet, but by semiflows, that is, groupings of packets that belong to the same communication, and is carried out individually for each semiflow.

An example of flow of communication 122 would be the set of packets generated when a smartphone of the computer network 1 views a YouTube video, where a connection is established between the device and a YouTube server, and an information exchange is made between both in the form of data packets that travel through the network.

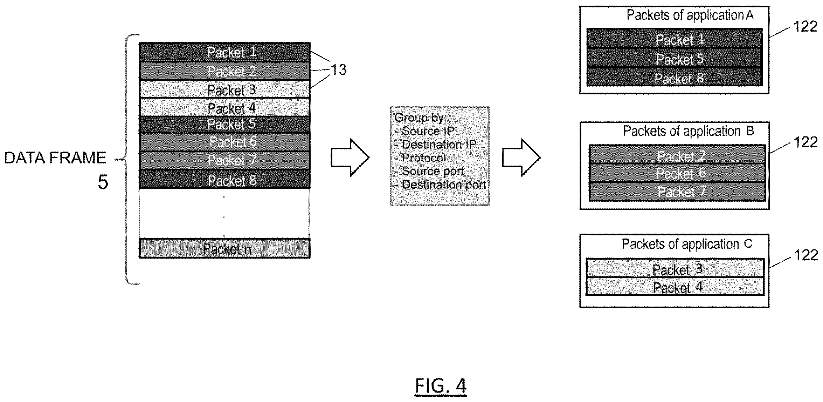

**Figure 4** shows, according to an embodiment, how the different flows of communication 122 are identified in the data frame 5 formed by n data packets 13. Data packets 13 that share a same communication protocol field, source address, destination address, source port, and destination port are identified as belonging to a same flow of communication 122. For this purpose, those data packets that have the same "source IP", "destination IP", "Protocol", "source port" and "destination port" field are grouped. The reason for this choice of features is as follows:
- "source IP" and "destination IP": this ensures that packets are traveling between an unambiguous sending device, identified with its "source IP", and an unambiguous receiving device, identified with its "destination IP".
- Protocol: if the previous packet flows with the same "source IP" and "destination IP" are filtered according to the communication protocol, it is avoided to mix those packets that, although they coincide in sender and receiver, use different communication protocols, and, therefore, belong to a different flow of communication.
- Source port and destination port: they serve to unequivocally identify and distinguish the different communications established by a specific device. The devices have a list of ports, and each program that has to establish communications makes use of a specific port for said communication. In this way, it is possible to distinguish those packets that, even if they coincide in sending and receiving device, and protocol, are part of different flows of communication since they are different applications.

Those data packets that share the aforementioned common fields belong to a single flow of an application or service X between two determined devices. In the example of Figure 4, data packets with a same color belong to a same flow of communication 122. Thus, by grouping by the aforementioned fields, three flows of communication corresponding in this example to three different applications are identified (packets 1, 5 and 8 correspond to application A, packets 2, 6 and 7 to application B and packets 3 and 4 to application C).

The flows of communication 122 of the network have been identified, but these may have a set of undefined packets, from 1 to n. Proposing to bring together all the packets that make up a flow as an input to a neural network model is not viable for multiple reasons. If you want to be able to classify network traffic in real time, you must be able to fragment existing flows, without waiting indefinitely until they are concluded. Another problem would be the large difference in the number of packets between different network flows, since some will be composed of hundreds of packets, while others of hundreds of thousands. Neural networks need a type of input data that always respects the same dimensionality.

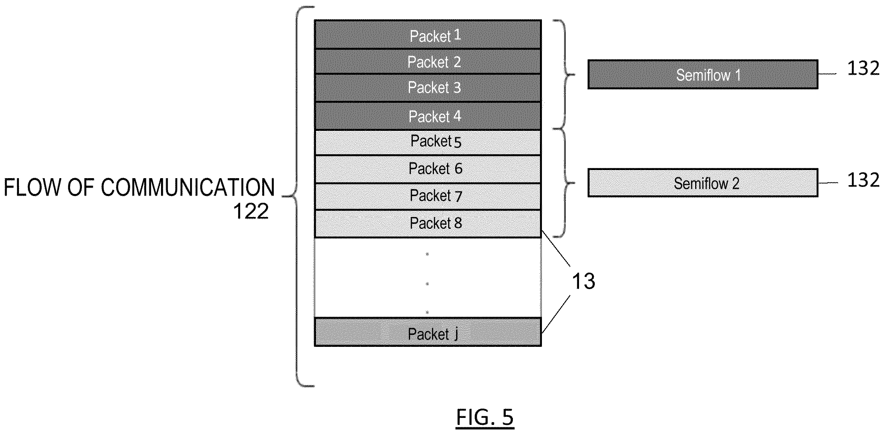

Therefore, each flow of communication 122 existing in the network is divided 130 into semiflows 132, which are subsets of packets. Due to the random nature of the flows of communication, with a variable size, these will be composed of an indefinite number of semiflows. **Figure 5** shows the division of a flow of communication 122, formed by j data packets 13, into semiflows 132. In one embodiment, a spatial boundary is established to the semiflows 132: a semiflow 132 shall be composed of x packets. In the example of Figure 5, a semiflow is terminated to begin forming another semiflow when 4 packets are reached. In this way, the number of packets of each semiflow is limited.

In another embodiment, a temporal restriction is further established to the timestamps of the data packets of each semiflow 132: a semiflow 132 is composed of x packets in t time. If the desired number of x packets is reached at the set time t, the semiflow 132 is valid; otherwise, it is discarded as it does not contain enough information from the flow of communication 122 to which it belongs.

Next, it is explained how the method is implemented in a more detailed way according to a possible embodiment, since gross network traffic is received, in the form of PCAP files, until the final output is generated with the information prepared to be analyzed and classified by an Al model.

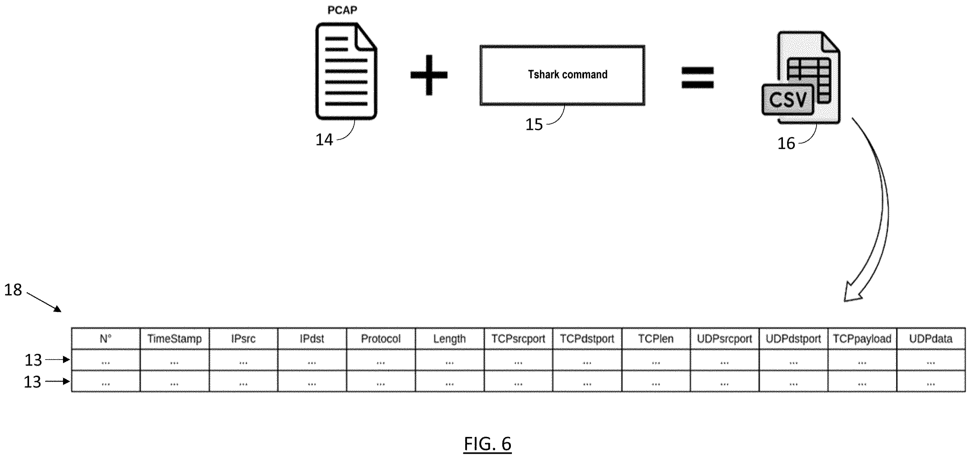

When a virgin PCAP file 14 is to be processed, it is transformed into a CSV file 16 (using for example a console command 15 of the Tshark program or another application), as shown in the example of **Figure 6****,** where each row is a data packet 13 and the columns contain information of the data packet 13. The columns that are obtained, as well as other options, are defined in said command (the columns obtained may be different from those shown in Figure 6). The Tshark command that generates a CSV file 16 with the columns represented in Figure 6 is as follows: "tshark -r file.pcap -E separator=, -E occurrence=I -E header=y -Tfields -e _ws.col.No. -e _ws.col.Time -e _ws.col.Source -e _ws.col.Destination -e _ws.col.Protocol -e _ws.col.Length -e tcp.srcport -e tcp.dstport -e tcp.len -e udp.srcport -e udp.dstport -e tcp.payload -e udp.payload".

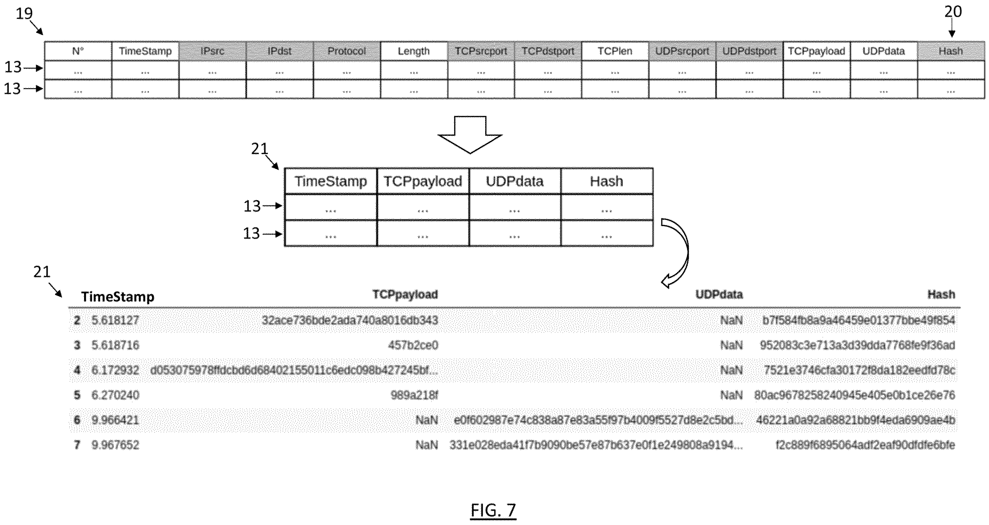

The next step is to transform the CSV file 16 to a two-dimensional data frame 18 (for example, Pandas dataframe, a table with rows and columns), to be able to edit it and work with the data more easily. Once the CSV file 16 has been converted to a two-dimensional data frame 18, it is modified as shown in **Figure 7****,** obtaining a modified two-dimensional data frame 19.

First, data packets 13 are eliminated:
- Those data packets 13 with protocols that do not provide information (e.g. the ARP address resolution protocol) are eliminated.
- Those data packets 13 that do not transmit data (the *TCPpayload and UDPdata* fields are empty) are eliminated.
- Those data packets 13 whose TCP data length is negligible (e.g. ≤2), since they are confirmations of receipt in the TCP protocol.

In addition, a "Hash" column 20 is added, which is obtained by hashing the content of the shaded fields, relating to the communication protocol, the source address, the destination address, the source port (in TCP and/or in UDP) and the destination port (in TCP and/or in UDP). In this way, the "Hash" column 20 will act as a label for the data packet 13, identifying which flow of communication 122 it belongs to. Thus the modified two-dimensional data frame 19 is obtained.

Once the shaded columns have been used to identify the flows of communication 122 through the hash, these columns are eliminated, which would only bring bias to the Al model, obtaining the reduced two-dimensional data frame 21. Variables such as the source address will change between different communications of the same type, and it is not intended to introduce to the Al model a data that is not relevant when identifying what type of communication it is. Only the data that is being transmitted, related to the payload of the data packets, will be used, and the Al model will be able to find characteristics and patterns in that data.

The reduced two-dimensional data frame 21 contains the list of data packets ordered chronologically by their timestamp, as they were in the original PCAP file 14, but each of these data packets will already have only the following information fields:
- The timestamp ("*TimeStamp*" field), which can be used to create the semiflows 132. The timestamp is included in each captured packet (e.g., using tools such as Wireshark or Tshark).

This timestamp is used in pre-processing, but is subsequently discarded by focusing solely on the payload.
- The payload, the data that the packet is actually transporting, which are either in the "*TCPpayload*" column if it is a TCP conversation, or in the "*UDPdata*" column if it is UDP (the one that does not correspond will be empty).
- The hash, which identifies to which conversation or flow of communication the data packet 13 corresponds.

An example of a reduced two-dimensional data frame 21 using actual data is shown at the bottom of Figure 7.

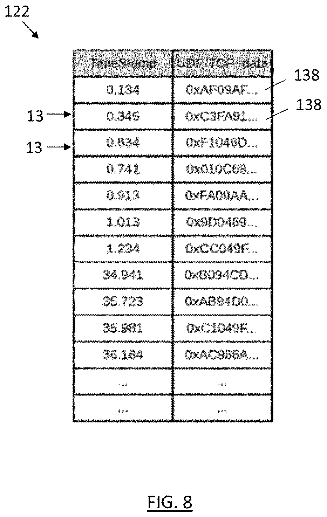

Next, the data frame is divided into flows of communication 122, that is, those data packets 13 containing the same hash are grouped. When grouping by flows of communication, those that do not reach a minimum established number of packets are discarded, discarding them as irrelevant flows of communication. For those flows of communication that pass the screen, the payload column that is empty is eliminated. If it is a flow that uses the TCP protocol, its "*UDPdata*" column is deleted, and if it is a flow that uses the UDP protocol, its "*TCPpayload*" column is eliminated. **Figure 8** shows an example two-dimensional data frame corresponding to a flow of communication 122, which includes only two columns, timestamp and payload 138 (TCP or UDP data). After this process, an auxiliary list has been created with all the relevant flows found in the data frame 5.

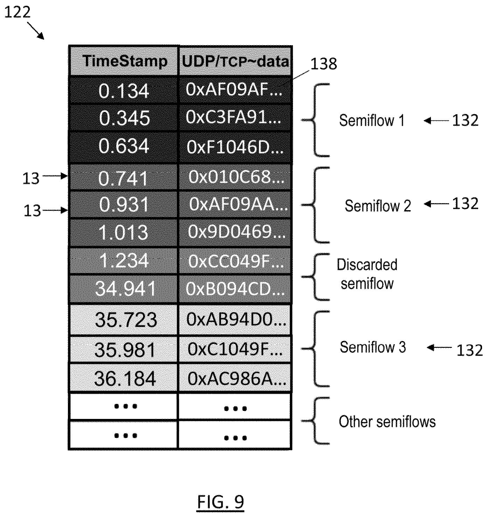

Each flow of communication 122 is separated or divided 130 into semiflows 132, which are subsets of packets, as an entire flow of communication 122 may occupy thousands or hundreds of thousands of packets. **Figure 9** shows the processing of the flow of communication 122 of Figure 8 and the obtaining of the semiflows 132, composed of a predetermined number of x packets (in the example, x=3), indicated for example in a configuration file stored in a memory. During the generation of the semiflows, it can also be taken into account that the packets thereof do not lose the connection with each other, which is measured with the timestamps (the "*TimeStamp*" column) of the packets. For example, if there are more than t seconds between the timestamp of the first data packet 13 of the semiflow 132 and that of the next data packet 13 to be added to the semiflow, it is considered that the relationship in that semiflow has been broken and that it is not valid. In the example, t=30 s, and the semiflow following the second semiflow is discarded as there is a difference of more than 30 seconds between the first timestamp (1.234 s) and the second timestamp (34.941 s). Therefore, to form these semiflows, the list of data packets 13 of the flow of communication 122 will be traversed and semiflows will be created, discarding those where the time limit is breached. The time limit t is a configurable hyperparameter, as is the number of packets x forming a semiflow.

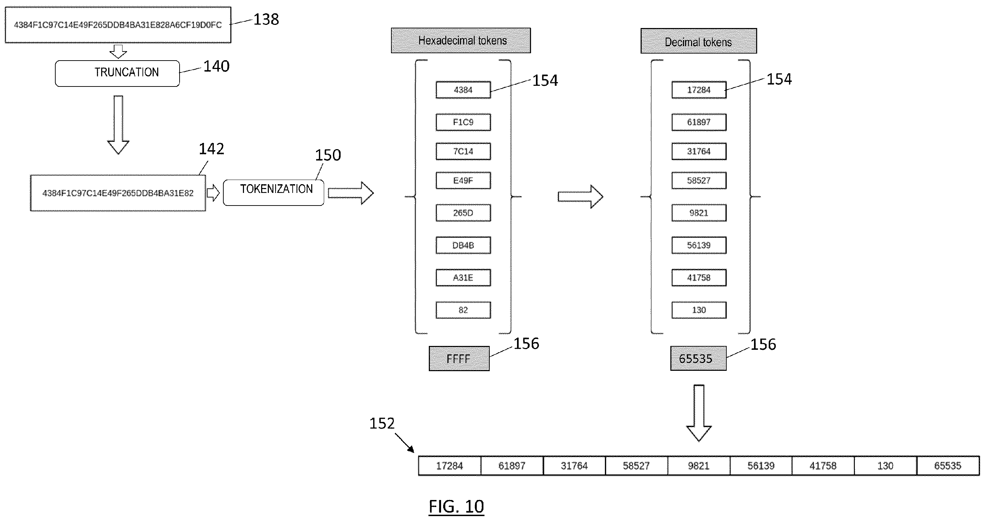

**Figure 10** shows the process of dividing 150 the payload 138 of a data packet 13 of a semiflow 132 into fragments or tokens ("tokenization", that is, the process of converting a sequence of data into smaller groups or parts, known as tokens). When a data packet is added to a semiflow, or subsequently, its payload 138 is modified, adjusting it 140 to a fixed size, this being a configurable parameter. In the example of Figure 10, the adjustment of the size of a payload 138 by truncation to 30 hexadecimal characters is shown, obtaining a modified payload 142. In the event that the size of the payload 138 is less than the preset size, *padding* is done, filling with zeros on the right.

Next, the modified payload 142 of the data packets of each semiflow 132 is divided 150 into fragments 154 of a predetermined size, obtaining a fragmented payload 152 for each data packet. In the example of the figure, the fixed size of the fragments or tokens is four hexadecimal characters, although it must be taken into account that the last fragment has only two characters, since it fits with the remaining characters of the packet, since the size of the token is a hyperparameter that is set to 4. The number of hexadecimal characters that make up a fragment 154 or token is a configurable parameter.

The input to the classifier is a list where each item corresponds to a packet divided into tokens. These tokens are used as a compact representation of the data to feed the classifier, allowing a structured and uniform processing of the fragmented information.

In one embodiment, the fragmented payload 152 of each data packet of a semiflow includes a completion fragment 156 with a predetermined value added at the end, which will preferably be the maximum value that can exist with the length of the fragment, that is, a fragment with all characters 'F' (if the number of characters per fragment is four, the termination fragment would be the "FFFF"). This completion token is included to explicitly indicate when a packet has finished and leads to the next one, facilitating the delimitation between packets within the semiflow.

Figure 10 shows the fragments 154 in hexadecimal format and their subsequent conversion to decimal format. The example shows the fragmented payload 152 expressed in decimal format.

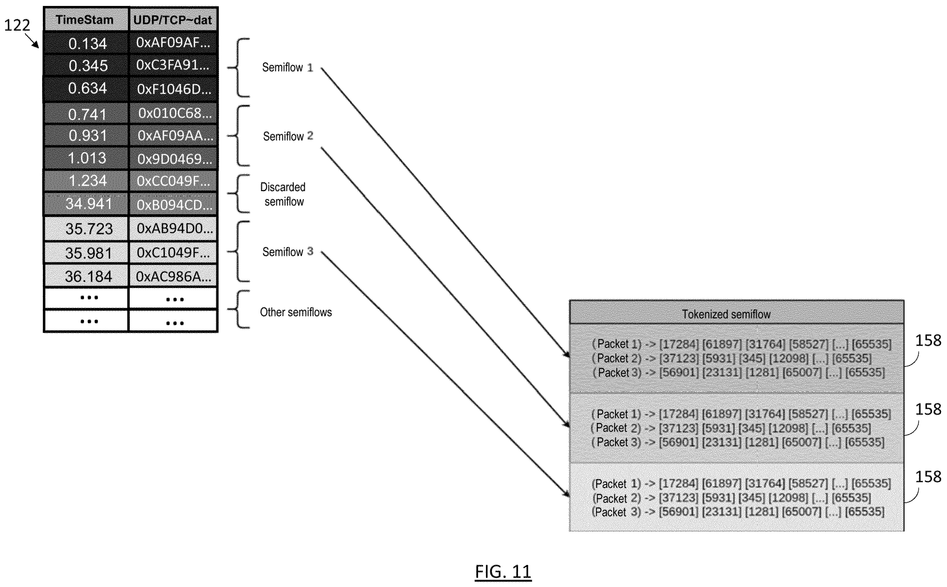

**Figure 11** shows the fragmented semiflows 158 corresponding to the flow of communication 122 of Figure 9. Each fragmented semiflow 158 comprises the fragmented payloads 152 of each of the data packets 13 that make up the semiflow 132.

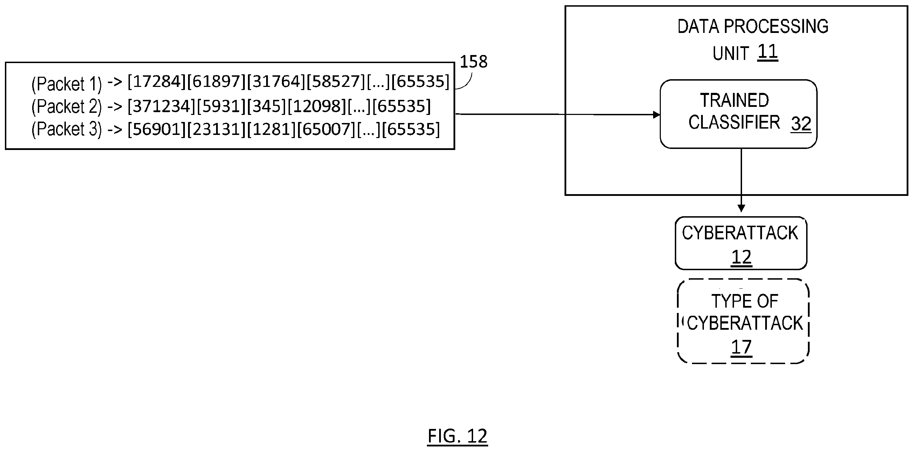

Finally, as illustrated in **Figure 12****,** the data processing unit 11 classifies each semiflow 132 using a trained classifier 32 based on an Al model (e.g. an artificial neural network) previously trained. Each semiflow to be classified is expressed by the fragmented payloads 152 of the data packets that make up the semiflow, that is, the fragmented semiflow 158.

The classification is carried out for each semiflow, which allows detecting a cyberattack 12 if at least one of the semiflows is classified as corresponding to a cyberattack. This approach allows the analysis of network traffic to be generalised in real time, ensuring a quick and effective response to possible threats. In this way, 160 cyberattacks 12 can be detected in the data frame 5 of the network traffic. Optionally, the trained classifier 32 may determine the type of cyberattack 17 if it has been trained to do so.

The classifiers used are preferably models based on recurrent neural networks of the LSTM (Long Short-Term Memory) type and architectures based on transformers. These classifiers are designed to process data sequences, which makes them particularly suitable for analyzing fragmented traffic and extracting contextual temporal patterns, fundamental for identifying anomalous or malicious behaviors in network traffic.

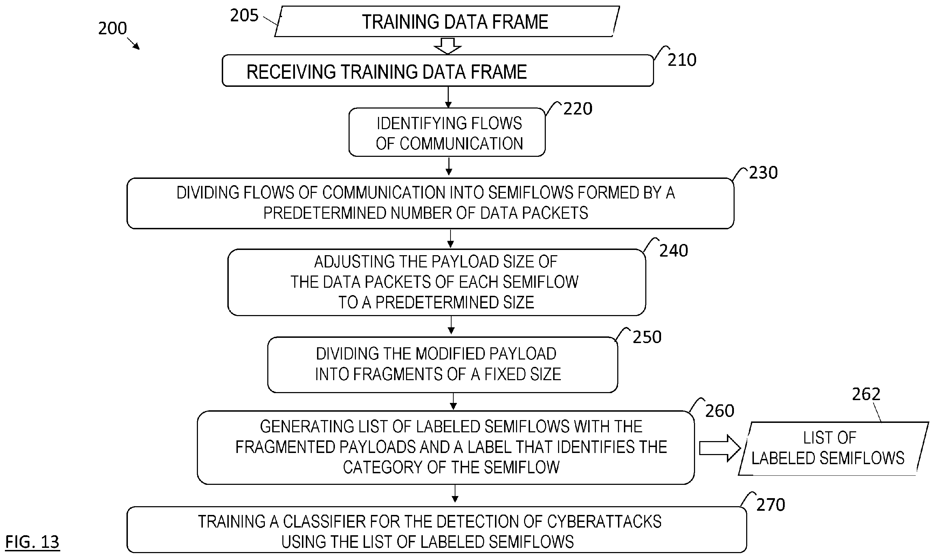

The present invention also relates to a computer-implemented method 200 of training a classifier for the detection of cyberattacks. **Fig. 13** represents a flow diagram with the steps of said method, comprising:
- Receiving 210 a training data frame 205 corresponding to a network traffic, wherein the training data frame comprises a plurality of data packet groups, each data packet group being associated with a certain category.
- Identifying 220 flows of communication 122 in the training data frame 205, where each flow of communication 122 corresponds to a set of data packets 13 of an application exchanged between two devices.
- Dividing 230 each flow of communication 122 into at least one semiflow 132, wherein each semiflow 132 is formed by a predetermined number of data packets 13.
- Adjusting 240 the payload 138 size of the data packets 13 of each semiflow 132 to a predetermined size, obtaining a modified payload 142 for each data packet 13.
- Dividing 250 the modified payload 142 of the data packets 13 of each semiflow 132 into fragments 154 of a fixed size, obtaining a fragmented payload 152 for each data packet 13.
- Generating 260 a list of labeled semiflows 262 comprising the fragmented payloads 152 of the data packets of each semiflow (fragmented semiflows 158) and a label that identifies the category to which each semiflow belongs, where the category identifies the semiflow as corresponding or not to a cyberattack.
- Training 270 a classifier for the detection of cyberattacks using the list of labeled semiflows 262, obtaining a trained classifier 32.

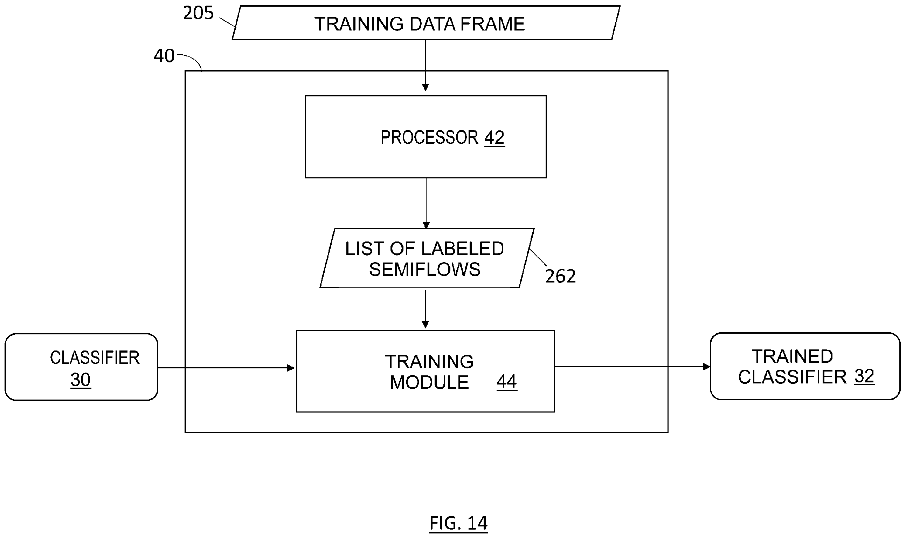

**Figure 14** shows schematically a system 40 of training a classifier 30 for the detection of cyberattacks. The system 40 comprises a processor 42 configured to generate, according to the method implemented by the training computer 200, the list of labeled semiflows 262. The system 40 also includes a training module 44 configured to train a classifier 30 for the detection of cyberattacks using the list of labeled semiflows 262. Thus the trained classifier 32 is obtained.

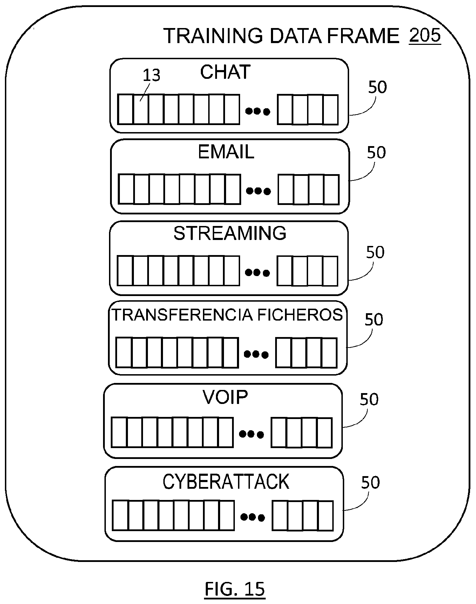

**Figure 15** shows an example of a training data frame 205, which comprises a plurality of groups 50 of data packets 13, each group 50 of data packets 13 being associated with a different category: chat, email, streaming, file transfer, VoIP, cyberattack.

Each group 50 of data packets 13 includes a data set that is used to generate classified traffic, since a controlled recording has been made where only communications of a specific type exist. However, there is still a need to identify flows of communication, since more than one device may have been recorded at the same time generating traffic, or that the device communicates with more than one server or external device. Thus, for example, the group 50 of data packets with the category "chat" may correspond to conversations or flows of communication of one or more chat applications, while the group 50 of data packets with the category "VolP" would correspond to flows of communication of one or more VoIP applications.

In order to detect cyberattacks, at least one of the groups 50 of data packets must correspond to the category of cyberattack. Thus the trained classifier 32 will be able to detect when a cyberattack occurs (when a fragmented semiflow 158 is classified with the category of cyberattack) and when the cyberattack does not occur (when the fragmented semiflows 158 are classified in the rest of the categories that do not correspond to a cyberattack).

The training data frame 205 may further include groups 50 of data packets corresponding to different categories of cyberattack, such that the trained classifier 32 may not only detect cyberattacks, but also classify the type of cyberattack.

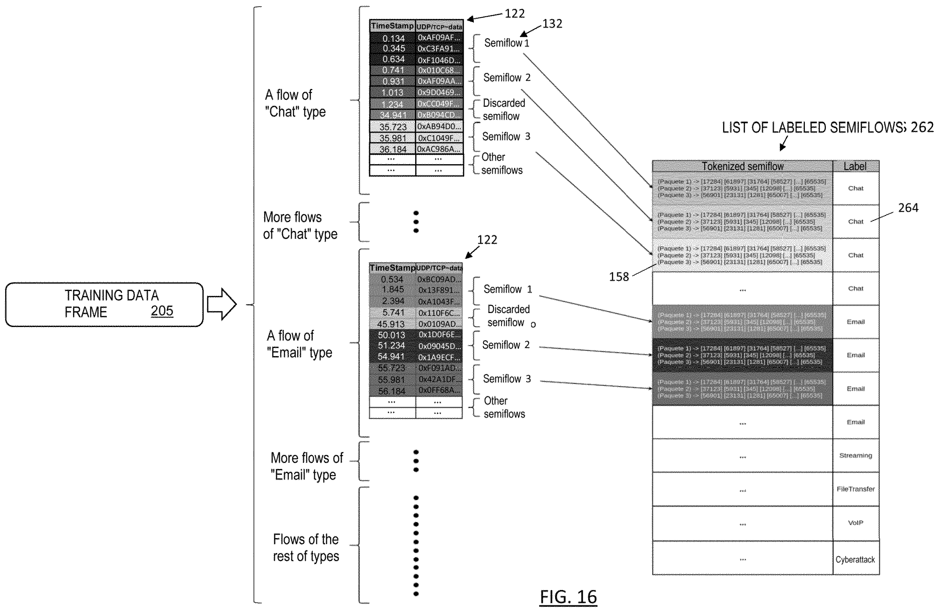

**Figure 16** shows the obtaining during training, from the training data frame 205 of Figure 15, of the different flows of communication 122 and, from them, of the semiflows 132. In particular, flows of communication 122 of the "chat" type, of the "email" type, of the "streaming" type, of the "file transfer" type, of the "VoIP" type and of the "cyberattack" type are obtained. Once each fragmented semiflow 158 is created, which is composed of a set of fragmented payloads 152 in fragments 154 of fixed size, they are added to a list of labeled semiflows 262, each labeled semiflow including the fragmented semiflow 158 and a label 264 that identifies to which category of communication that semiflow belongs.

Once the creation of the list of labeled semiflows 262 is finished, it is divided into two vectors, separating the label 264 from the fragmented semiflows 158, since it is necessary to train an Al model to have on one hand the data and the labels on the other. The following two vectors will therefore be available:
- A fragmented semiflow vector with the following dimensionality: [N][P][T], where 'N' is the number of total semiflows, 'P' is the number of packets per semiflow (a configurable parameter), and 'T' is the number of fragments 154 into which the payload of each packet has been divided, which depends on two configurable parameters: the parameter defining the length of characters to which the payload is truncated (or padded) and the parameter defining how many hexadecimal characters a fragment 154 contains.
- A label vector with the following dimensionality: [N][E], where 'N' is the number of total semiflows and 'E' is the number of communication categories present in the semiflows.

After all this process, an Al model (trained classifier 32) will be trained and ready to identify and classify both malignant and benign traffic, accurately indicating those packets of the total network traffic that posed a possible threat, so that the network administrator can take the appropriate actions to combat the threat.

To demonstrate the effectiveness of the method proposed in the present invention, an Al model trained to classify cyberattacks is detailed below. Specifically, the classifier has been trained with the data set called TON_loT, created by the UNSW (The University of New South Wales in Sydney, Australia). From this data set, the raw recordings in PCAP format of cyberattacks on IOT devices have been used. These recordings are made up of a total of nine different types of cyberattacks 17: "Injection_normal", "Normal_backdoor", "Normal_DoS", "Normal_scanning", "Password_normal", "MITM_normal", "Normal_DDoS", "Normal_ransomware", "Normal_XSS".

Using this data set, and using the method described above, an Al model has been trained that is capable of identifying and classifying network traffic between the different types of cyberattacks present in the data set, as well as benign traffic of various categories. The output of the classifier depends on the labels with which it has been trained: if the traffic is benign, the model will assign a label corresponding to the known category (such as "chat", "mail", etc.); if the traffic is malicious, the label of the corresponding cyberattack will be assigned (such as "injection_normal"). It is important to note that if the model faces traffic not present in the training set, whether benign or malicious, it will tend to classify it with the most similar label within those it knows, according to characteristics of the analyzed traffic. The metrics obtained on the portion of the data set reserved for the test are presented below:
- Accuracy = 0.8282
- Loss = 0.6018
- Cohen kappa score = 0.7851
- Correlation coefficient Matthews = 0.7903
- Logarithmic loss = 0.6018
- ROC AUC Score = 0.9601

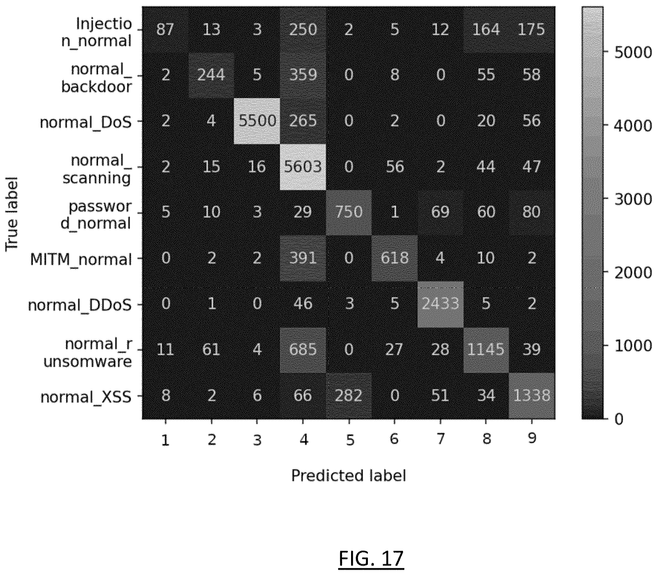

**Figure 17** represents the confusion matrix obtained, where on the horizontal axis "1" equals "injection_normal", and so on up to "9" which equals "normal_XSS". Therefore, it is observed in the metrics how in the face of a complex problem of classification of malignant traffic, with up to nine different types of cyberattacks 17, the Al model has been able to learn to discern and classify them with great accuracy, demonstrating the effectiveness of the algorithm in facilitating the learning of Al models, even in the presence of complex classification challenges

## Claims

1. A computer-implemented method for the detection of cyberattacks, comprising:
receiving (110) a data frame (5) of a network traffic, where the data frame (5) comprises a plurality of data packets (13);
identifying (120) flows of communication (122) in the data frame (5) of the network traffic, where each flow of communication (122) corresponds to a set of data packets of an application exchanged between two devices;
dividing (130) each flow of communication (122) into at least one semiflow (132), wherein each semiflow (132) is formed by a predetermined number of data packets (13);
adjusting (140) the payload (138) size of the data packets (13) of each semiflow (132) to a predetermined size, obtaining a modified payload (142) for each data packet (13);
dividing (150) the modified payload (142) of the data packets (13) of each semiflow (132) into fragments (154) of a fixed size, obtaining a fragmented payload (152) for each data packet (13); and
detecting (160) cyberattacks (12) in the data frame (5) of the network traffic by classifying each semiflow, using a trained classifier (32) that takes as input the fragmented payloads (152), as corresponding or not to a cyberattack (12).

2. The computer-implemented method according to claim 1, further comprising classifying the type of cyberattack (17) in the data frame (5) of the network traffic by classifying each semiflow, using the trained classifier (32), as corresponding or not to certain types of cyberattack.

3. The computer-implemented method according to any one of the preceding claims, wherein data packets (13) that share the same communication protocol field, source address, destination address, source port, and destination port are identified as belonging to a same flow of communication (122).

4. The computer-implemented method according to any one of the preceding claims, wherein the data packets (13) of the data frame (5) of the network traffic have an associated timestamp, and wherein the timestamps of the data packets (13) of each semiflow (132) must comply with a time restriction.

5. The computer-implemented method according to any one of the preceding claims, wherein the fragmented payload (152) of each data packet (13) of a semiflow (132) includes a completion fragment (156) with a predetermined value added at the end.

6. The computer-implemented method according to any one of the preceding claims, wherein the trained classifier (32) is based on a previously trained artificial neural network.

7. A computer-implemented method of training a classifier for the detection of cyberattacks, comprising:
receiving (210) a training data frame (205) corresponding to a network traffic, where the training data frame (205) comprises a plurality of groups (50) of data packets (13) associated with a certain category;
identifying (220) flows of communication (122) in the training data frame (205), where each flow of communication (122) corresponds to a set of data packets of an application exchanged between two devices;
dividing (230) each flow of communication (122) into at least one semiflow (132), wherein each semiflow (132) is formed by a predetermined number of data packets (13);
adjusting (240) the payload (138) size of the data packets (13) of each semiflow (132) to a predetermined size, obtaining a modified payload (142) for each data packet (13);
dividing (250) the modified payload (142) of the data packets (13) of each semiflow (132) into fragments (154) of a fixed size, obtaining a fragmented payload (152) for each data packet (13);
generating (260) a list of labeled semiflows (262) comprising the fragmented payloads (152) of the data packets (13) of each semiflow and a label (264) that identifies the category to which each semiflow belongs, where the category identifies the semiflow as corresponding or not to a cyberattack; and
training (270) a classifier (30) for the detection of cyberattacks using the list of labeled semiflows (262).

8. The computer-implemented method according to claim 7, wherein the training data frame (205) includes a plurality of groups (50) of data packets (13) associated with categories that identify different types of cyberattack (17);
wherein the labels (264) of the list of labeled semiflows (262) identify the type of cyberattack (17); and wherein the computer-implemented method (200) comprises training the classifier (30) to classify the type of cyberattack (17) using the list of labeled semiflows (262).

9. A system for the detection of cyberattacks, comprising a data processing unit (11) configured to:
receive a data frame (5) of a network traffic, where the data frame (5) comprises a plurality of data packets (13);
identify flows of communication (122) in the data frame (5) of the network traffic, where each flow of communication (122) corresponds to a set of data packets of an application exchanged between two devices;
divide each flow of communication (122) into at least one semiflow (132), wherein each semiflow (132) is formed by a predetermined number of data packets (13);
adjust the payload (138) size of the data packets (13) of each semiflow (132) to a predetermined size, obtaining a modified payload (142) for each data packet (13);
divide the modified payload (142) of the data packets (13) of each semiflow (132) into fragments (154) of a fixed size, obtaining a fragmented payload (152) for each data packet (13); and detect cyberattacks (12) in the data frame (5) of the network traffic by classifying each semiflow,
using a trained classifier (32) that takes as input the fragmented payloads (152), as corresponding or not to a cyberattack (12).

10. The system according to claim 9, wherein the data processing unit (11) is further configured to classify the type of cyberattack (17) in the data frame (5) of the network traffic by classifying each semiflow, using the trained classifier (32), as corresponding or not to certain types of cyberattack.

11. A training system of a classifier for the detection of cyberattacks, comprising:
- a processor (42) configured to:
receive a training data frame (205) corresponding to a network traffic, where the training data frame (205) comprises a plurality of groups (50) of data packets (13) associated with a certain category;
identify flows of communication (122) in the training data frame (205), where each flow of communication (122) corresponds to a set of data packets of an application exchanged between two devices;
divide each flow of communication (122) into at least one semiflow (132), wherein each semiflow (132) is formed by a predetermined number of data packets (13);
adjust the payload (138) size of the data packets (13) of each semiflow (132) to a predetermined size, obtaining a modified payload (142) for each data packet (13);
divide the modified payload (142) of the data packets (13) of each semiflow (132) into fragments (154) of a fixed size, obtaining a fragmented payload (152) for each data packet; and
generate a list of labeled semiflows (262) comprising the fragmented payloads (152) of the data packets (13) of each semiflow and a label (264) that identifies the category to which each semiflow belongs, where the category identifies the semiflow as corresponding or not to a cyberattack; and
- a training module (44) configured to train a classifier (30) for the detection of cyberattacks using the list of labeled semiflows (262).

12. The system according to claim 11, wherein the training data frame (205) includes a plurality of groups (50) of data packets (13) associated with categories that identify different types of cyberattack (17);
wherein the labels (264) of the list of labeled semiflows (262) identify the type of cyberattack (17); and wherein the training module (44) is configured to train the classifier (30) to classify the type of cyberattack (17) using the list of labeled semiflows (262).

13. A non-transitory computer-readable storage medium for the detection of cyberattacks, comprising program instructions that, when executed by a processor, cause the processor to carry out the method of any one of claims 1 to 6.

14. A non-transitory computer-readable storage medium for training a classifier for the detection of cyberattacks, comprising program instructions that, when executed by a processor, cause the processor to perform the method of any of claims 7 to 8.
